(19) Europäisches Patentamt
European Patent Office
Office européen des brevets

(11) Veröffentlichungsnummer: **0 059 374**
**B1**

(12) **EUROPÄISCHE PATENTSCHRIFT**

(45) Veröffentlichungstag der Patentschrift: **24.10.84**

(51) Int. Cl.[3]: **C 08 G 65/44**

(21) Anmeldenummer: **82101206.9**

(22) Anmeldetag: **18.02.82**

(54) **Verfahren zur Herstellung von Polyphenylenäthern.**

(30) Priorität: **26.02.81 DE 3107201**

(43) Veröffentlichungstag der Anmeldung:
**08.09.82 Patentblatt 82/36**

(45) *Bekanntmachung des Hinweises auf die Patenterteilung:*
**24.10.84 Patentblatt 84/43**

(84) Benannte Vertragsstaaten:
***BE DE FR GB NL***

(56) Entgegenhaltungen:
**FR - A - 2 241 589**

**Die Akte enthält technische Angaben, die nach dem Eingang der Anmeldung eingereicht wurden und die nicht in dieser Patentschrift enthalten sind.**

(73) Patentinhaber: **BASF Aktiengesellschaft, Carl-Bosch-Strasse 38, D-6700 Ludwigshafen (DE)**

(72) Erfinder: **Naarmann, Herbert, Dr., Haardtblick 15, D-6719 Wattenheim (DE)**
Erfinder: **Haaf, Franz, Dr., Leistadter Strasse 9, D-6702 Bad Duerkheim (DE)**
Erfinder: **Hilier, Heinrich, Dr., Theodor-Heuss-Strasse 11, D-6706 Wachenheim (DE)**
Erfinder: **Brandstetter, Franz, Dr., Ritterbuechel 45, D-6730 Neustadt (DE)**

**EP 0 059 374 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

ACTORUM AG

**Beschreibung**

Die Erfindung betrifft ein Verfahren zur Herstellung hochmolekularer Polyphenylenäthern aus einwertigen Phenolen, die in den beiden ortho-Stellungen und gegebenenfalls in meta-Position, nicht aber in der para-Stellung Alkylsubstituenten aufweisen, durch oxidative Kupplungsreaktion mit Sauerstoff bei Temperaturen zwischen 10 und 70° C in Gegenwart eines Katalysators, eines organischen Amins, eines organischen Lösungsmittels im Bereich von 1:1 bis 20:1 Gewichtsteilen, bezogen auf das monomere Phenol, und gegebenenfalls eines Aktivators.

Bei derartigen Verfahren zur Selbstkondensation einwertiger Phenole durch Einwirken von Sauerstoff sind Katalysatorsysteme erforderlich, die in Gegenwart eines Lösungsmittels die oxidative Kupplungsreaktion in Gang bringen.

Es ist bekannt, zur Erfüllung dieser Erfordernisse in aromatischen Lösungsmitteln wie Benzol oder Toluol die Reaktion in Anwesenheit eines Katalysatorkomplexes aus Kupfer(II)salzen und einem geradkettigen aliphatischen Amin sowie einem niedermolekularen Alkylalkohol durchzuführen (vgl. US-A Nr. 3661848). Nach Beendigung der Reaktion wird die das Polymere enthaltende Aromatenlösung mit etwa der 10fachen Menge Methanol versetzt, das ausgefällte Polymere abfiltriert, mit Methanol gewaschen und bei 70° C im Vakuum getrocknet.

Dieser bisher ausgeübte Reaktionsweg weist neben dem Nachteil der vergleichsweise geringen Polymerenausbeute auch den Nachteil der Bildung von Nebenprodukten wie Tetramethyldiphenochinon und niedermolekularen Polyphenylenäthern auf. Ausserdem bereitet die restlose Entfernung des Kupfers erhebliche Probleme.

Der Erfindung lag die Aufgabe zugrunde, durch Abändern der Polymerisationsbedingungen Polymere mit hoher Ausbeute zu erhalten, die sowohl ein hohes Molekulargewicht als auch eine einheitliche Molekulargewichtsverteilung zeigen und keine Kupferspuren im Polymeren enthalten.

Diese Aufgabe wird erfindungsgemäss dadurch gelöst, dass als Katalysator ein Metallkomplex des 5,14-Dihydrodibenzo-[b.i.]-[5.9.14.18]-tetraaza[14]-annulens der allgemeinen Formel (I)

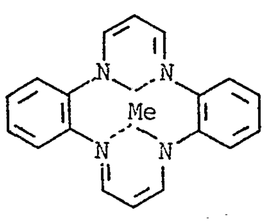

(I)

wobei Me ein Metall der VII. oder VIII. Nebengruppe des Periodensystems der Elemente, vorzugsweise Eisen, Kobalt, Palladium oder Nickel ist, im alkalischen Medium verwendet wird.

Nach bevorzugter Verfahrensweise ist das alkalische Medium ein Amin, besonders bevorzugt Pentylamin, Hexylamin, Heptylamin, Dibutylamin, Octylamin, Nonylamin oder deren Mono-, Di- oder Trimethylderivat.

Bevorzugt ist das alkalische Medium auch eine wässerige Lösung einer anorganischen Base wie Natrium-, Kalium-, Barium- oder Calciumhydroxid oder eines alkalisch wirkenden Salzes wie Kaliumcarbonat oder Trinatriumphosphat, wobei die wässerigen Lösungen zwischen 1 und 60 Gew.-% der anorganischen Base oder des alkalisch wirkenden Salzes enthalten sollen.

Der Katalysator der Formel I wird zweckmässig in Mengen von 0,2 bis 2,5 Gew.-%, bezogen auf die Gesamtmenge des monomeren Phenols, und das alkalische Medium in Mengen von 2,0 bis 25,0 Gew.-%, bezogen auf die Gesamtmenge des monomeren Phenols, verwendet.

Besonders bevorzugt ist ein Verfahren, bei dem der Katalysator I und das alkalische Medium und 0,1 bis 5 Gew.-% 2,6-Dimethylphenol, bezogen auf die Gesamtmenge des monomeren Phenols, in das im organischen Lösungsmittel vorgelegte Monomer unter gleichzeitiger $O_2$- und/oder Luftbegasung eindosiert wird.

Unter hochmolekularen Polyphenylenäthern werden die durch oxidative Kupplung von 2,6-Dialkylphenol zu einer Kette alkylsubstituierter, in para-Stellung durch Sauerstoffatome ätherartig gebundene Benzolringe verstanden. Die erfindungsgemässen Polymeren weisen molekulargewichte von 23000 bis 40000, bevorzugt 25000 bis 30000, bestimmt nach der in „Macromolecular Synthesis", *1* (1978), S. 83 angegebenen Methode, auf. Hochmolekulare Polyphenylenäther, auch Poly(phenylenoxide) genannt, sind an sich aus der Literatur seit längerem bekannt (vgl. z.B. US-A Nrn. 3661848, 3219625 oder 3378505), so dass sich hier eine weitere Beschreibung erübrigt.

Die zur Herstellung der hochmolekularen Polyphenylenäther verwendeten einwertigen Phenole, die in den beiden ortho-Stellungen und gegebenenfalls der meta-Position, nicht aber in der para-Stellung Alkylsubstituenten aufweisen, sind die üblichen Phenole wie 2,6-Dimethylphenol, 2,6-Diäthylphenol, 2-Methyl-6-äthylphenol, 2-Methyl-6-propylphenol, 2,6-Dibutylphenol, 2,3,6-Trimethylphenol sowie Gemische dieser Phenole.

Zur Ausführung der Polykondensation wird üblicherweise Sauerstoff in die 25 bis 50° C warme Lösung des Monomeren in Gegenwart eines Katalysatorkomplexes eingeleitet. Die Sauerstoffdurchflussgeschwindigkeit ist im wesentlichen die gleiche, wie sie in den US-A Nrn. 3306874 und 3306875 beschrieben ist.

Bei dem für die Polykondensation bekannten Katalysatorkomplex handelt es sich üblicherweise um eine Kombination aus einem Amin, z.B. n-Dibutylamin, Diäthylamin, Picolin, Chinolin, Pyridinbasen oder Triisopropylamin mit einem Kupfersalz wie Kupfer(I)bromid, Kupfer(I)chlorid oder Kupfer(II)acetylacetonat.

Der Gewichtsanteil des Lösungsmittels liegt üblicherweise im Bereich von 1:1 bis 20:1, d.h. maximal bis zu einem Überschuss des 20fachen am Lösungsmittel, bezogen auf das Monomer.

Als Lösungsmittel werden Benzol, Toluol und aliphatische Kohlenwasserstoffe, vorzugsweise $C_6$- bis $C_{10}$-Kohlenwasserstoffe, verwendet.

Darüberhinaus kann die Reaktionsmischung einen Aktivator wie ein Diarylguanidin oder ein Diarylformamidin enthalten (vgl. US-A Nr. 3544515).

Nach erfindungsgemässem Verfahren soll der Katalysator ein Metallkomplex des 5,14-Dihydrodibenzo-[b.i.]-[5.9.14.18]-tetraaza-[14]-annulens I mit einem Metall der VII. oder VIII. Nebengruppe des Periodensystems der Elemente, bevorzugt mit Fe, Co, Pd oder Ni, sein. Die Synthese des erfindungsgemässen Komplexes ist in der Literaturstelle Liebigs „Annalen der Chemie", *717* (1968), S. 137 ff. beschrieben. Dieser Metallkomplex wird im alkalischen Medium der eingangs definierten Art, bevorzugt in Mengen von 0,2 bis 2,5 Gew.-%, bezogen auf die Gesamtmenge des monomeren Phenols, eingesetzt. Unter alkalischem Medium im Sinne der Erfindung werden Amine oder wässerige Lösungen anorganischer Basen verstanden. Besonders bevorzugte alkalische Medien sind Pentylamin, Hexylamin, Heptylamin, Dibutylamin, Octylamin, Nonylamin, oder deren Mono-, Di- oder Trimethylderivate wie 1-Methylpentylamin, 1-Methyloctylamin, 1,5-Dimethyloctylamin, 1,4-Dimethylpentylamin, oder eine 1 bis 60gew.-%ige wässerige Lösung von Natrium-, Kalium-, Barium- oder Calciumhydroxid oder von Kaliumcarbonat oder Trinatriumphosphat. Am besten geeignet ist das 1,4-Dimethylpentylamin. Ein bevorzugter Bereich bei der Menge des eingesetzten alkalischen Mediums ist 2,0 bis 25,0 Gew.-%, bezogen auf die Gesamtmenge des monomeren Phenols. Nach besonders geeigneten erfindungsgemässen Verfahren wird der Katalysator I, das alkalische Medium und 0,01 bis 5 Gew.-% 2,6-Dimethylphenol, bezogen auf die Gesamtmenge des monomeren Phenols, in die Vorlage des im organischen Lösungsmittel gelösten Monomeren bei gleichzeitiger $O_2$ und/oder Luftbegasung eindosiert.

Beim erfindungsgemässen Verfahren wird die Polykondensationsreaktion bei Temperaturen zwischen 10 und 70, vorzugsweise 15 und 42° C, durchgeführt. Hierzu wird der Sauerstoff in die 15 bis 42° C warme Lösung des Monomeren in Gegenwart des erfindungsgemässen Katalysatorkomplexes eingeleitet. Die Reaktion ist nach kurzer Zeit beendet, das Katalysatorgemisch kann in 0,1 bis 1,5 h in die Monomerlösung unter Sauerstoff- oder Luftbegasung eindosiert werden.

Die mit der Erfindung erzielten Vorteile bestehen insbesondere darin, dass die Polymeren in Ausbeuten von grösser als 95 Gew.-%, bezogen auf das eingesetzte Monomere, erhalten werden, und dass die Molekulargewichtsverteilung sehr einheitlich ist. Das Molekulargewicht der Polymeren liegt zwischen 23 000 und 40 000, bevorzugt 25 000 bis 30 000, bestimmt nach der in „Macromolecular Synthesis" *1*, (1978), S. 83, beschriebenen Methode. Die Polymeren sind frei von Kupferresten.

Die Erfindung wird durch die nachfolgenden Beispiele näher erläutert.

*Beispiel 1*

*Herstellung von Poly-[(2,6-dimethyl-1,4-phenylen)-äther].*

Eine Vorlage von 1,3 g Metallkomplex I, wobei $Me=Pd^{2+}$, und 20 g 1,4-Dimethylpentylamin und 2 g 2,6-Dimethylphenol (= DMP) wird bei 20° C 5 min unter Einleiten von Sauerstoff gerührt, und dann wird im Verlauf von 30 min in eine Lösung von 204 g DMP in 1400 g Toluol eindosiert. Anschliessend wird noch 1 h bei 20° C gerührt. Die Reaktion wird unter Einleiten von 30 l Sauerstoff pro Stunde durchgeführt.

Nach Beendigung der Reaktion wird das Polymerisat in der Reaktionslösung mit Methanol ausgefällt und 2mal mit 100 ml Methanol gewaschen. Das erhaltene Polymerisat hat nach dem Trocknen eine Intrinsic Viskosität [η] von 0,8 dl/g. Die Ausbeute an Polymeren lag bei 98% (bezogen auf das eingesetzte Monomer).

*Beispiel 2*

Wird wie im Beispiel 1 beschrieben gearbeitet, jedoch Art und Menge der Katalysatoren variiert, so werden die in der folgenden Tabelle wiedergegebenen Resultate erhalten.

*Tabelle*

| Beispiel Nr. | Metallkomplex I (g) wasserfrei | Einsatz von jeweils 206 g DMP alkalisches Medium Art und Menge (g) | | dl/g 25° C [η] |
|---|---|---|---|---|
| 2 | $Ni^{2+}$ 1,0 | Octylamin | 33 | 0,63 |
| 3 | $Ni^{2+}$ 1,5 | Pentylamin | 33 | 0,69 |
| 4 | $Ni^{2+}$ 2,0 | Heptylamin | 33 | 0,50 |
| 5 | $Ni^{2+}$ 3,0 | 1-Methylpentylamin | 33 | 0,40 |
| 6 | $Ni^{2+}$ 4,0 | 1,4-Dimethylpentylamin | 33 | 0,35 |
| 7 | $Ni^{2+}$ 5,0 | 1-Methyloctylamin | 33 | 0,73 |
| 8 | $Co^{2+}$ 1,0 | 1,5-Dimethyloctylamin | 33 | 0,70 |
| 9 | $Co^{2+}$ 2,0 | Nonylamin | 33 | 0,69 |
| 10 | $Co^{2+}$ 3,0 | Dibutylamin | 33 | 0,82 |
| 11 | $Co^{2+}$ 4,0 | Dibutylamin | 33 | 0,48 |
| 12 | $Co^{2+}$ 4,0 | NaOH 50%ig* | 25 | 0,49 |

| Beispiel Nr. | Metallkomplex I (g) wasserfrei | Einsatz von jeweils 206 g DMP alkalisches Medium Art und Menge (g) | | dl/g 25°C [η] |
|---|---|---|---|---|
| 13 | $Fe^{2+}$ 1,0 | $Na_3PO_4$ 50%ig* | 33 | 0,43 |
| 14 | $Fe^{2+}$ 2,0 | Dibutylamin | 33 | 0,50 |
| 15 | $Fe^{2+}$ 2,0 | KOH 50%ig* | 33 | 0,35 |
| 16 | $Fe^{2+}$ 3,0 | 1,4-Dimethylpenthylamin | 33 | 0,52 |
| 17 | $Fe^{2+}$ 3,0 | Octylamin | 15 | 0,52 |
| 18 | $Fe^{2+}$ 5,0 | Dibutylamin | 30 | 0,48 |

* Analysen in Prozent beziehen sich auf jeweils 50gew.-%ige wässerige Lösungen.

Die Dosierungszeit des Katalysators betrug bei den Versuchen 2 bis 10 jeweils 60 min; bei den Versuchen 11 bis 14 45 min und bei den Versuchen 15 bis 18 30 min.

## Patentansprüche

1. Verfahren zur Herstellung hochmolekularer Polyphenylenäther aus einwertigen Phenolen, die in beiden ortho-Stellungen und gegebenenfalls in meta-Position, nicht aber in der para-Stellung Alkylsubstituenten aufweisen, durch oxidative Kupplungsreaktion mit Sauerstoff bei Temperaturen zwischen 10 und 70° C in Gegenwart eines Katalysators, eines organischen Amins, eines organischen Lösungsmittels im Bereich von 1:1 bis 20:1 Gew.-Teilen, bezogen auf das monomere Phenol, und gegebenenfalls eines Aktivators, dadurch gekennzeichnet, dass als Katalysator ein Metallkomplex des 5,14-Dihydrodibenzo-[b.i.]-[5.9.14.18]-tetraaza-[14]-annulens der allgemeinen Formel (I)

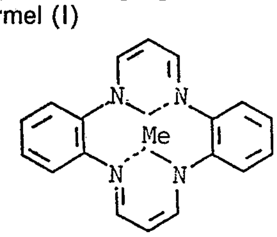

(I)

wobei Me ein Metall der VII. oder VIII. Nebengruppe des Periodensystems der Elemente ist, im alkalischen Medium verwendet wird.

2. Verfahren nach Anspruch 1, dadurch gekennzeichnet, dass das Metall der allgemeinen Formel (I) Eisen, Kobalt, Palladium oder Nickel ist.

3. Verfahren nach Anspruch 1, dadurch gekennzeichnet, dass das alkalische Medium ein Amin ist.

4. Verfahren nach Anspruch 1, dadurch gekennzeichnet, dass das alkalische Medium Pentylamin, Hexylamin, Heptylamin, Dibutylamin, Octylamin, Nonylamin, oder deren Mono-, Di- oder Trimethylderivat ist.

5. Verfahren nach Anspruch 1, dadurch gekennzeichnet, dass das alkalische Medium eine wässerige Lösung einer anorganischen Base wie Natrium-, Kalium-, Barium- oder Calciumhydroxid oder eines alkalisch wirkenden Salzes wie Kaliumcarbonat oder Trinatriumphosphat ist.

6. Verfahren nach Anspruch 1, dadurch gekennzeichnet, dass der Katalysator der allgemeinen Formel (I) in Mengen von 0,2 bis 2,5 Gew.-%, bezogen auf die Gesamtmenge des monomeren Phenols, verwendet wird.

7. Verfahren nach Anspruch 1, dadurch gekennzeichnet, dass das alkalische Medium in Mengen von 2,0 bis 25,0 Gew.-%, bezogen auf die Gesamtmenge des monomeren Phenols, verwendet wird.

8. Verfahren nach den Ansprüchen 1 und 4, dadurch gekennzeichnet, dass die wässerige Lösung zwischen 1 und 60 Gew.-% der anorganischen Base oder des alkalisch wirkenden Salzes enthält.

9. Verfahren nach Anspruch 1, dadurch gekennzeichnet, dass der Katalysator (I) und das alkalische Medium und 0,01 bis 5 Gew.-% 2,6-Dimethylphenol, bezogen auf die Gesamtmenge des monomeren Phenols, in das im organischen Lösungsmittel vorgelegte Monomer unter gleichzeitiger $O_2$- und/oder Luftbegasung eindosiert wird.

## Claims

1. A process for the preparation of high molecular weight polyphenylene ethers from monohydric phenols, which are alkyl-substituted in the two ortho positions and optionally in the meta position, but not in the para position, by an oxidative coupling reaction with oxygen at a temperature of from 10 to 70° C in the presence of a catalyst, an organic amine and an organic solvent, the weight ratio of the solvent to the monomeric phenol being from 1:1 to 20:1, and in the presence or absence of an activator, wherein a metal complex of 5,14-dihydrodibenzo-[b.i.]-[5,9,14,18]-tetraaza-[14]-annulene of the general formula (I)

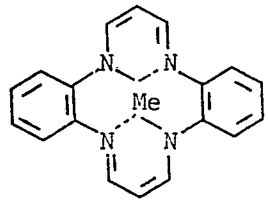

(I)

where Me is a metal of Groups VIIB and VIII of the periodic table, is used as the catalyst in the alkaline medium.

2. A process as claimed in Claim 1, wherein the metal of the general formula (I) is iron, cobalt, palladium or nickel.

3. A process as claimed in Claim 1, wherein the alkaline medium is an amine.

4. A process as claimed in Claim 1, wherein the alkaline medium is pentylamine, hexylamine, heptylamine, dibutylamine, octylamine, nonylamine or a mono-, di- or trimethyl derivative thereof.

5. A process as claimed in Claim 1, wherein the alkaline medium is an aqueous solution of an inorganic base, such as sodium, potassium, barium or calcium hydroxide, or of an alkaline-reacting salt, such as potassium carbonate and trisodium phosphate.

6. A process as claimed in Claim 1, wherein the catalyst of the general formula (I) is used in an amount of from 0.2 to 2.5% by weight, based on the total amount of the monomeric phenol.

7. A process as claimed in Claim 1, wherein the alkaline medium is used in an amount of from 2.0 to 25.0% by weight, based on the total amount of the monomeric phenol.

8. A process as claimed in Claims 1 and 4, wherein the aqueous solution contains from 1 to 60% by weight of the inorganic base or the alkaline-reacting salt.

9. A process as claimed in Claim 1, wherein the catalyst (I), the alkaline medium and from 0.01 to 5% by weight, based on the total amount of the monomeric phenol, of 2,6-dimethylphenol are metered into the monomer initially charged into the organic solvent, while simultaneously passing in $O_2$ and/or air.

## Revendications

1. Procédé pour la préparation d'éthers de polyphénylène de poids moléculaire élevé à partir de phénols monovalents qui comportent des substituants alcoyle dans les deux positions ortho et, le cas échéant, en position méta, mais non en position para, par la réaction de copulation oxydative avec l'oxygène à une température comprise entre 10 et 70° C, en présence d'un catalyseur, d'une amine organique, d'un solvant organique dans une proportion comprise entre 1 : 1 et 20 : 1 par rapport au phénol monomère et, le cas échéant, d'un activateur, caractérisé en ce qu'on utilise, en tant que catalyseur, un complexe métallique du 5,14-dihydrodibenzo-[b.i.]-[5.9.14.18]-tétraaza-[14]-annulène de formule générale (I)

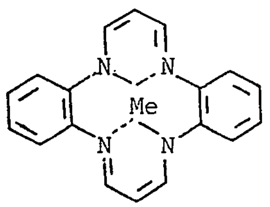

(I)

dans laquelle Me est un métal du VII^e ou VIII^e groupe auxiliaire du système des éléments, en milieu alcalin.

2. Procédé selon la revendication 1, caractérisé en ce que le métal de la formule générale (I) est le fer, le cobalt, le palladium ou le nickel.

3. Procédé selon la revendication 1, caractérisé en ce que le milieu alcalin est une amine.

4. Procédé selon la revendication 1, caractérisé en ce que le milieu alcalin est la pentylamine, l'hexylamine, l'heptylamine, la dibutylamine, l'octylamine, la nonylamine ou leurs dérivés mono-, di- ou triméthylés.

5. Procédé selon la revendication 1, caractérisé en ce que le milieu alcalin est une solution aqueuse d'une base minérale telle que l'hydroxyde de sodium, de potassium, de baryum ou de calcium, ou un sel à action alcaline tel que le carbonate de potassium ou le phosphate trisodique.

6. Procédé selon la revendication 1, caractérisé en ce que le catalyseur de formule générale (I) est utilisé dans des proportions de 0,2 à 2,5% en poids, sur la base de la quantité totale du phénol monomère.

7. Procédé selon la revendication 1, caractérisé en ce que le milieu alcalin est utilisé dans des proportions de 2,0 à 25% en poids sur la base de la quantité totale du phénol monomère.

8. Procédé selon les revendications 1 et 4, caractérisé en ce que la solution aqueuse contient entre 1 et 60% en poids de la base minérale ou du sel à action alcaline.

9. Procédé selon la revendication 1, caractérisé en ce que le catalyseur (I), le milieu alcalin et 0,01 à 5% en poids de 2,6-diméthylphénol, sur la base de la quantité totale du phénol monomère, sont introduits progressivement, sous insufflation simultanée de $O_2$ et/ou d'air, dans le monomère chargé préalablement dans le solvant organique.